# EUROPÄISCHE PATENTSCHRIFT

(11) **EP 3 932 834 B1**
(45) Veröffentlichungstag und Bekanntmachung des Hinweises auf die Patenterteilung: **31.01.2024**
(21) Anmeldenummer: 21180914.0
(22) Anmeldetag: 22.06.2021
(51) Int. Cl.: B65G 17/06

(54) **EIERFÖRDERER**
EGG CONVEYOR
TRANSPORTEUR D'OEUFS

(30) Priorität: 03.07.2020 DE 102020117653
(43) Veröffentlichungstag der Anmeldung: 05.01.2022
(73) Patentinhaber: LUBING Maschinenfabrik Ludwig Bening GmbH & Co. KG, 49406 Barnstorf (DE)
(72) Erfinder: von der Assen, Markus, 49439 Steinfeld (DE); Johanning, Reiner, 49356 Diepholz (DE)
(74) Vertreter: Meissner Bolte Partnerschaft mbB

(56) Entgegenhaltungen:
- WO-A1-2019/236017
- DE-A1-102014 114 575
- DE-U- 1 756 540
- US-A- 3 615 002

## Beschreibung

Die Erfindung betrifft einen Eierförderer gemäß dem Oberbegriff des Anspruchs 1.

Der Bedarf an Eiern wird größtenteils durch sogenannte Legeeinheiten bzw. -einrichtungen gedeckt. In diesen Legeanlagen werden Hühner großer Zahl gehalten, um Eier zu legen. Die Größe solcher Legeeinrichtungen steigt unter Wirtschaftlichkeitsgesichtspunkten ständig, womit auch die Anzahl der täglich von den Hühnern gelegten Eier zunimmt. Die Eier müssen von Eierförderern aus den Ställen zu Verarbeitungsstationen transportiert werden, in denen die Eier insbesondere sortiert und verpackt werden.

Mit zunehmender Größe der Legeeinheiten sind Eierförderer erforderlich, die über eine längere Förderstrecke verfügen. Solche Eierförderer sind als Kettenförderer ausgebildet, die über parallele endlose Förderketten verfügen, die durch quer zur Förderstrecke verlaufende stangen- oder rohrartige Tragmittel miteinander verbunden sind. Die Tragmittel folgen so dicht aufeinander, so dass sie ein rostartiges Trum bilden, auf dem die Eier während des Transports längs der Förderstrecke ruhen.

Bislang werden die Förderketten solcher Eierförderer von einem Hauptantrieb angetrieben. Das die Eier aufnehmende Obertrum bewegt sich dabei in Transportrichtung entlang der Förderstrecke, während ein Untertrum des Kettenförderers unter dem Obertrum zurückläuft zum Anfang der Förderstrecke. Bei langen Eierförderern sind entsprechend lange Förderketten erforderlich, die durch den vom Hauptantrieb nur an einer Stelle erfolgenden Antrieb hohen mechanischen Belastungen, vor allem Zugbelastungen, ausgesetzt sind. Außerdem lassen sich bei langen Förderstrecken vielfach erforderliche ansteigende oder abfallende Förderstreckenabschnitte nur schwer realisieren.

Die WO 2019/236017 A1 beschreibt einen Förderer für zylindrische Produkte unterschiedlicher Durchmesser. Dieser Förderer wird von zwei Servomotoren angetrieben, wobei ein Servomotor umlaufende Förderketten und ein anderer Servomotor einen Zahnriemen antreibt. Von den Förderketten werden quer zur Transportrichtung verlaufende zylindrische Transportrohre in Transportrichtung weiterbewegt, während vom Zahnriemen die zylindrischen Transportrohre um ihre Längsachse gedreht werden. Der eigentliche Antrieb dieses Förderers erfolgt über die von einem Servomotor angetriebenen Förderketten. Der andere Servomotor dient lediglich zum Drehen der zylindrischen Transportrohre.

Der Erfindung liegt ausgehend vom Vorstehenden die Aufgabe zugrunde, einen vorzugsweise nach Art eines Kettenförderers ausgebildeten Eierförderer für lange Förderstrecken zu schaffen, der zumindest die vorstehend genannten Probleme beseitigt.

Ein Eierförderer zur Lösung dieser Aufgabe weist die Merkmale des Anspruchs 1 auf. Bei diesem Eierförderer ist es vorgesehen, im Verlauf der Förderstrecke wenigstens einen Zwischenantrieb anzuordnen. Der Antrieb der Förderketten des Eierförderers erfolgt so an mehreren über die Länge der Förderstrecke verteilten Stellen, so dass die Förderketten und die mit denselben in Eingriff stehenden Antriebszahnräder, die auch als "Kettennüsse" bezeichnet werden, geringeren Belastungen ausgesetzt sind. Vor allem lassen sich so auch Steig- und/oder Gefällestrecken im Verlauf längerer Förderstrecken einfacher bilden. Der wenigstens eine Zwischenantrieb ist zwischen einem Ober- und einem Untertrum des Eierförderers angeordnet. Dadurch ist der wenigstens eine Zwischenantrieb platzsparend im Zwischenraum zwischen dem Ober- und dem Untertrum untergebracht.

Bevorzugt ist es vorgesehen, beide mit Abstand parallel nebeneinander verlaufenden Antriebszahnräder des Zwischenantriebs zwischen oberen Strängen und unteren Strängen der beiden umlaufend geführten parallelen Förderketten des Kettenförderers anzuordnen.

Eine vorteilhafte Möglichkeit der Weiterbildung des Eierförderers besteht darin, den wenigstens einen Zwischenantrieb wahlweise an obere Stränge des Obertrums oder untere Stränge des Untertrums anzukoppeln. Dann sind bedarfsweise die Antriebskettenräder des wenigstens einen Zwischenantriebs mit den Förderketten im Bereich des Obertrums oder des Untertrums des Eierförderers in Eingriff bringbar. Diese Wahlmöglichkeit führt zu einer großen Flexibilität bei der Auslegung des Eierförderers, insbesondere der Anordnung des wenigstens einen Zwischenantriebs im Verlauf der Förderstrecke des Eierförderers.

Der oder jeder Zwischenantrieb weist zwei Antriebszahnräder auf, von denen jedes eine der parallel nebeneinanderliegend angeordneten, endlosen Förderketten antreibt. Die beiden beabstandeten Antriebszahnräder jedes Zwischenantriebs sind mit einem dem Abstand der Förderketten entsprechenden Abstand unverdrehbar auf einer gemeinsamen drehend antreibbaren Antriebswelle angeordnet. Die Antriebswelle verläuft quer zur Förderstrecke bzw. parallel zu den längs zur Transportrichtung der Eier entlang der Förderstrecke verlaufenden Tragmitteln für die vom Eierförderer entlang der Förderstrecke zu transportierenden Eier. Dabei liegen vorzugsweise Längsmittelachsen der Antriebszahnräder auf einer Drehachse der Antriebswelle. Auf diese Weise ist ein exakt synchroner Antrieb der beiden beabstandeten nebeneinanderliegenden Förderketten des Eierförderers gewährleistet. Außerdem erfordert dadurch der jeweilige Zwischenantrieb nur noch einen einzigen Antrieb, bei dem es sich um einen Motor, beispielsweise Elektromotor, vorzugsweise aber einen Motor mit einem Getriebe oder eine Motor-GetriebeEinheit handelt. Das Getriebe gewährleistet einen für empfindliche Eier erforderlichen Antrieb der Förderketten mit relativ geringer Geschwindigkeit.

Bevorzugt ist es vorgesehen, dass die Zähne der Antriebszahnräder von der Seite derselben gesehen, insbesondere in Richtung der Längsmittelachsen und/oder der Drehachsen der Antriebszahnräder gesehen, ein Zahnprofil aufweisen, das abgesehen von funktions- und/oder verschleißbedingten Toleranzen spielfrei in das jeweilige Kettenglied eingreift und/oder das jeweilige Kettenglied weitestgehend ausfüllt. Der Eingriff des jeweiligen Zahns jedes Kettenrads kann dadurch frei von Relativbewegungen zwischen dem Kettenglied und dem in dieses eingreifenden Zahn erfolgen. Dadurch erzeugt der wenigstens eine zusätzlich zum Hauptantrieb im Verlauf der Förderstrecke vorgesehene Zwischenantrieb keine Ruckbewegungen, die zu Beschädigungen der auf dem Eierförderer längs der Förderstrecke weiterzutransportierenden Eier führen, insbesondere auch dann, wenn Eier im Verlauf des Obertrums des Eierförderers aneinanderliegen und sich dadurch berühren. Das hat einen sanften und schonenden Transport der Eier durch den Eierförderer längs seiner Förderstrecke zur Folge. Der ruckfreie und sanfte Eingriff der Antriebszahnräder des Zwischenantriebs in die Kettenglieder der Förderketten des Eierförderers führt so zur größten Schonung der Eier während ihres Transports vom Eierförderer längs seiner Förderstrecke.

Bei einer bevorzugten Ausgestaltungsmöglichkeit des Eierförderers ist es vorgesehen, alle untereinander gleichen Zähne der Antriebsräder mit einer Zahndicke zu versehen, die dazu führt, dass immer ein Zahn pro Antriebszahnrad in einer Stellung desselben, in der der Zahn maximal in das betreffende Kettenglied eintaucht, vorzugsweise so weit, dass er sich durch das Kettenglied hindurch erstreckt, die zu diesem Kettenglied benachbarten Kettenglieder fest gegen die Enden des Kettenglieds, durch das sich der jeweilige Zahn des betreffenden Antriebszahnrads erstreckt, drückt. Vorzugsweise wird dieses dadurch erreicht, dass die für alle Zähne gleiche Zahndicke der inneren Kettengliedlänge, die gleich der Teilung der Förderkette ist, abzüglich des Durchmessers der beiden benachbarten Kettenglieder entspricht. Dadurch passt der jeweilige Zahn durch das mit ihm in Eingriff bringbare Kettenglied, lässt aber noch Platz für die benachbarten Kettenglieder, die sich zur Bildung der Förderketten an gegenüberliegenden Enden durch das mit dem Zahn in Eingriff stehende Kettenglied erstrecken. So drückt der in die jeweilige Förderkette eingreifende Zahn aufgrund seiner Abmessung, insbesondere seiner Zahndicke, die benachbarten Kettenglieder gegen die Enden des dazwischenliegenden Kettenglieds, in das bzw. durch das der betreffende Zahn des jeweiligen Antriebszahnrads eintritt bzw. hindurchtritt.

Besonders vorteilhaft ist es, wenn die Teilung der Zähne der Antriebsräder doppelt so groß ist wie Teilung der Kettenglieder der Förderketten. Dadurch tritt immer nur ein Zahn jedes Antriebszahnrads in jedes zweite Kettenglied der jeweiligen Förderkette ein. Weil die aufeinanderfolgenden Kettenglieder der Antriebsketten jeweils um 90° verdreht zueinander aufeinanderfolgen, tritt so immer nur ein Zahn der Antriebszahnräder in ein gleichermaßen orientiertes Kettenglied ein, und zwar insbesondere ein solches, das quer zur Radialrichtung des betreffenden Zahns verläuft. Die dazwischenliegenden Kettenglieder, die anders orientiert sind und in die so kein Zahn eintreten kann, werden auf diese Weise überbrückt.

Jedes Antriebszahnrad ist gemäß einer vorteilhaften Ausgestaltungsmöglichkeit des Eierförderers mit fünf bis neun gleichen Zähnen versehen. Vorzugsweise weist jedes Antriebszahnrad eine gerade Anzahl untereinander gleicher Zähne auf, und zwar vorzugsweise sechs oder acht Zähne. Solche Antriebsräder verfügen über einen relativ geringen Durchmesser, so dass sie sich leicht zwischen oberen und unteren Stränge der Förderketten und somit dem Ober- und Untertrum des Eierförderers unterbringen lassen.

Eine vorteilhafte Weiterbildungsmöglichkeit der Erfindung sieht es vor, dass die Zähne der Antriebszahnräder von der Seite gesehen ein rechteckiges Profil aufweisen, wobei die Zahnhöhe etwas geringer ist als die Zahndicke, vorzugsweise die Zahnhöhe dem 0,7-fachen bis 0,95-fachen der Zahndicke. Solchermaßen ausgebildete Zähne können ausreichend tief in das jeweilige Kettenglied eintauchen, vorzugsweise so weit, dass sie sich nahezu vollständig durch das Kettenglied hindurch erstrecken. Darüber hinaus zeigen solche Zähne ein sanftes Eintauchverhalten in das jeweilige Kettenglied und lassen sich leicht und zwängungsfrei aus demselben wieder herausziehen. Dabei werden schon in einer Anfangsphase des Eintauchens eines Zahns in das ihm zugeordnete Kettenglied die damit verbundenen benachbarten Kettenglieder stramm gegen die beiderseitigen Enden des Kettenglieds gedrückt, in das der jeweilige Zahn eintritt. Gleiches gilt beim Austauschen des jeweiligen Zahns aus dem Kettenglied.

Besonders vorteilhaft ist es, alle Zähne der Antriebszahnräder an den Übergängen ihrer Zahnenflanken zu den Zahnspitzen und/oder den Zahnfüßen abzurunden bzw. abzuschrägen. Vor allem in Kombination mit dem rechteckigen Grundprofil der Zähne kann so ein zwängungsfreies Eintauchen des jeweiligen Zahns in das ihm zugeordnete Kettenglied erfolgen und bei vollständig in das Kettenglied eingetauchtem oder auch sich ganz durch das Kettenglied erstreckenden Zahn können sich die gerundeten oder gegebenenfalls auch abgeschrägten Zahnfüße unter dem jeweiligen Kettenglied abstützen.

Es ist vorteilhaft, wenn der Radius der Abrundung der Zahnfüße der 0,4-fachen bis 0,5-fachen äußeren Breite des jeweiligen Kettenglieds entspricht. Dann schmiegt sich an der jeweiligen Abrundung des Zahnfußes des jeweiligen Zahns ein benachbartes Kettenglied zwängungsfrei an. Dadurch wird verhindert, dass sich das jeweilige Kettenglied auf dem Zahn festklemmt, wenn dieser vollständig in das Kettenglied eingetreten ist.

Eine vorteilhafte Weiterbildungsmöglichkeit der Erfindung besteht darin, dass die Antriebszahnräder untereinander gleichen Zähne aufweisen, wobei die Zahnhöhe dem 0,8-fachen bis 1,2-fachen der äußeren Breite der Kettenglieder der Förderketten entspricht. Dadurch können die Zähne in etwa soweit durch ein ihm zugeordnetes Kettenglied hindurchtreten, wie die beidseitig benachbarten und um 90° gedrehten Kettenglieder jeweils hoch sind. Das führt schon beim Eintauchen der Zähne in das ihm zugeordnete Kettenglied, aber auch beim Herausziehen aus diesem Kettenglied dazu, dass die beidseitig benachbarten Kettenglieder stramm gegen die gegenüberliegenden Enden des mittleren, zum Hindurchtritt des Zahns bestimmten Kettenglieds gedrückt werden.

Den gleichen Durchmesser der Antriebszahnräder und/oder die Abstände des Ober- und Untertrums der Förderstrecke sind so aufeinander abgestimmt, dass die Zähne der Antriebszahnräder entweder in die zur Bildung des Obertrums beitragenden oberen Stränge oder die an der Bildung des Untertrums beteiligten unteren Stränge der Förderketten eingreifen. Bevorzugt sind dazu die Antriebszahnräder mit einer möglichst geringen Anzahl von Zähnen versehen, und zwar fünf bis sieben Zähne, insbesondere sechs Zähne. Dadurch kann der mindestens eine Zwischenantrieb bei einem Eierförderer eingesetzt werden, deren Trume aus Gründen der Platzeinsparung keine größeren Abstände als üblich aufzuweisen dürfen.

Gemäß der Erfindung sind dort, wo sich der jeweilige Zwischenantrieb befindet, das Obertrum und/oder das Untertrum mit einem nach außen gewölbten Verlauf versehen. Dann lässt sich der jeweilige Zwischenantrieb auch zwischen sehr dicht zusammenliegenden Trumen unterbringen. Gleichzeitig wird durch den nach außen gewölbten Verlauf des Ober- und/oder Untertrums, insbesondere der diesen zugeordneten Förderketten, ein günstiges Überdeckungsverhältnis zwischen den Förderketten und den Antriebszahnrädern herbeigeführt.

Besonders vorteilhaft ist es, die Förderketten als Rundgliederketten (auch "Rundstahlketten" genannt) mit gleichen Kettengliedern auszubilden. Die Kettenglieder sind oval ausgebildet, und zwar vorzugsweise als langgliedrige und/oder lehrenhaltige Kettenglieder. Die Begriffe "lehrenhaltig" und "langgliedrig" sind so zu verstehen, wie sie in den einschlägigen DIN-Normen, beispielsweise DIN 762, 764 und/oder 766, oder entsprechenden EU-Normen für Rundgliederketten definiert sind. Solche Rundgliederketten verfügen über abwechselnd aufeinanderfolgende aufrechtstehende oder flachliegende gleiche Kettenglieder.

Die gleich ausgebildeten Zähne der Antriebskettenräder und der ebenfalls gleich ausgebildeten Kettenglieder der Förderketten sind so aufeinander abgestimmt, dass jeweils ein Zahn in ein flachliegendes Kettenglied eingreifen kann. Vorzugsweise sind die Antriebszahnräder so bemessen, dass stets ein Zahn desselben durch ein flachliegendes Kettenglied hindurchgreifen kann.

Bei durch ein flachliegendes Kettenglied hindurchtretendem Zahn stützen sich die vorderen und hinteren Zahnflanken an auf gegenüberliegenden Enden durch das flachliegende Kettenglied geführte beidseitig benachbarte aufrechte Kettenglieder ab. Dadurch kommt es zu einem nahezu spielfreien Eingriff des jeweiligen Zahns in ein flachliegendes Kettenglied und ein Anliegen des Zahns am mindestens einen benachbarten aufrechten Kettenglied, vorzugsweise beiden benachbarten Kettengliedern, was einen sanften, gleichmäßigen und vor allem ruckfreien Antrieb der Förderketten des Eierförderers zur Folge hat.

Es ist des Weiteren vorgesehen, aufgrund des Eingriffs der Zähne der Antriebszahnräder in flachliegende Kettenglieder der Förderketten die Antriebszahnräder einscheibig mit einer Reihe umlaufend auf den Umfang der Antriebszahnräder verteilte Zähne auszubilden. Solche Antriebszahnräder können sehr schmal ausgebildet werden, indem sie vorzugsweise der inneren Breite der ovalen Kettenglieder der Förderketten entsprechen, vorzugsweise etwas kleiner ist, so dass die Zähne in den flachliegenden Kettengliedern nicht festklemmen können.

Bei in flachliegende Kettenglieder eingreifenden Zähnen der Antriebszahnräder liegen die benachbarten aufrechten Kettenglieder zwischen zwei benachbarten Zähnen des jeweiligen Antriebszahnrads. Dabei sind die Freiräume, insbesondere Zahnzwischenräume, zwischen aufeinanderfolgenden Zähnen der Antriebszahnräder so gestaltet, dass die aufrechten Kettenglieder im Wesentlichen zwängungsfrei in den Freiräumen bzw. Zahnzwischenräumen zwischen zwei aufeinanderfolgenden Zähnen Aufnahme finden.

Damit die Zähne der Antriebszahnräder durch die flachliegenden Kettenglieder, deren Innenraum infolge der damit verketteten benachbarten aufrechtstehenden Kettenglieder eingeengt ist, hindurchgreifen können, entspricht die Dicke jedes der gleichen Zähne der Antriebszahnräder der Teilung der Rundgliederketten abzüglich der zweifachen Dicke der Kettenglieder. Es ist dadurch eine maßliche Abstimmung der gleichen Zähne der Antriebszahnräder auf die Kettenglieder vorhanden. Dadurch können die Zähne spielfrei in flachliegende Kettenglieder der als Rundgliederketten ausgebildeten Förderketten eingreifen. Die Angabe "spielfrei" bedeutet in diesem Sinne, dass ein toleranzbedingtes oder auch verschleißbedingtes geringfügiges Spiel von 0,1 mm bis 1 mm, vorzugsweise 0,2 mm bis 0,5 mm, vorhanden sein darf, ohne dass dieses dem erfindungsgemäß beabsichtigten kontinuierlichen ruckfreien Antrieb des Eierförderers durch den mindestens einen Zusatzantrieb beeinträchtigt.

Ein bevorzugtes Ausführungsbeispiel der Erfindung wird nachfolgend anhand der Zeichnung näher erläutert. In dieser zeigen:
- Fig. 1: eine perspektivische Darstellung eines Eierförderers,
- Fig. 2: eine perspektivisch dargestellte vergrößerte Einzelheit II aus der Fig. 1,
- Fig. 3: die vergrößerte Einzelheit aus der Fig. 1 in einer Seitenansicht,
- Fig. 4: ein Zwischenantrieb des Eierförderers in einer Seitenansicht bei einem angetriebenen gewölbtem Obertrum des Eierförderers,
- Fig. 5: eine Ansicht analog zur Fig. 4 bei geringer gewölbtem Obertrum, und
- Fig. 6: eine Ansicht analog zur Fig. 5 bei einem angetriebenen gewölbten Untertrum des Eierförderers.

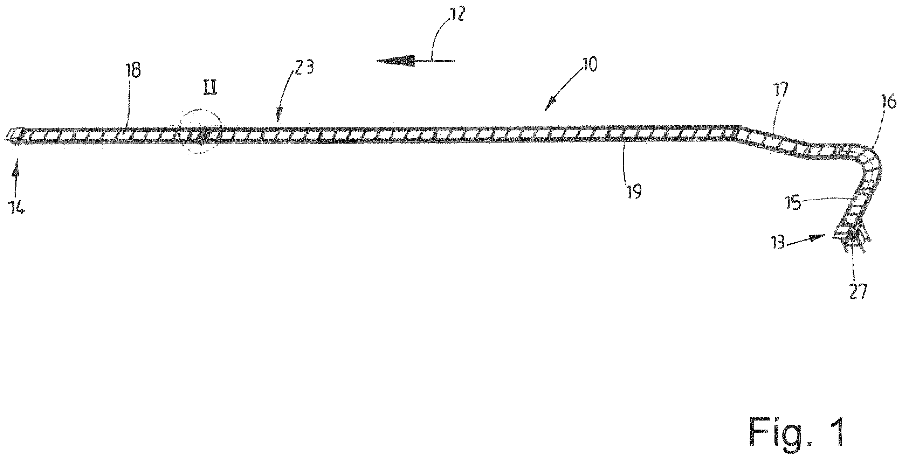

Die Fig. 1 zeigt exemplarisch einen möglichen Verlauf des Eierförderers. Der gezeigte Verlauf entspricht einer Förderstrecke 10 des Eierförderers. Entlang der Förderstrecke 10 werden nur in den Fig. 1 bis 3 schematisch gezeigte Eier 11 entlang der Förderstrecke 10 in Transportrichtung 12 von einem Anfang 13 der Förderstrecke 10 bis zu einem Ende 14 der Förderstrecke 10 transportiert. In Transportrichtung 12 folgen auf den Anfang 13 ein kurzer horizontaler gerader Abschnitt 15, ein 90°-Bogen 16, ein geradliniger Steigungsabschnitt 17 und ein längerer geradliniger horizontaler Abschnitt 18, der bis zum Ende 14 der Förderstrecke 10 reicht. Die Erfindung ist nicht auf Eierförderer mit dem in der Fig. 1 gezeigten Verlauf, insbesondere der Förderstrecke 10, beschränkt. Vielmehr eignet sich die Erfindung für Eierförderer mit Förderstrecken beliebiger Art, die von der in der Fig. 1 gezeigten Förderstrecke 10 abweichen. Vor allem eignet sich die Erfindung für Förderstrecken mit einer beliebigen Anzahl an Bögen, geraden Abschnitten, Steigungsabschnitten oder auch Gefälleabschnitten. Wie der Verlauf der Förderstrecke ausgebildet ist, richtet sich im Wesentlichen nach den örtlichen Gegebenheiten in der Legeanlage bzw. -einheit, wo der jeweilige Eierförderer zum Einsatz kommen soll.

Die gezeigte Förderstrecke 10 des Eierförderers erstreckt sich im Bereich einer Legeeinheit bzw. mit mindestens einem Stall mit Legehennen und einem daran angrenzenden bzw. separaten Gebäude, in dem vorzugsweise eine Sortierung und eine Verpackung der aus dem Stall oder den Ställen kommenden Eier 10 erfolgt. Gegebenenfalls kann auch eine Reinigung der Eier 11 in diesem Gebäude erfolgen genauso wie andere Behand lungen, die typischerweise an den Eiern 11 vorgenommen werden. Der mindestens eine Stall oder das Gebäude zur Behandlung der Eier 11 sind in der Fig. 1 nicht gezeigt. In der Regel ist der Anfang 13 der Förderstrecke 10 einem Stall oder einem Eiersammelraum mehrerer Ställe zugeordnet, während das Ende 14 der Förderstrecke 10 sich im Gebäude befindet, in dem die Eier 11 sortiert, gereinigt und/oder verpackt werden.

Der in den Figuren gezeigte Eierförderer ist nach Art eines Kettenförderers ausgebildet, kann also auch als Eierkettenförderer bezeichnet werden. Dieser Förderer verfügt über ein ortsfest montiertes Traggerüst und ein umlaufend antreibbares Tragorgan 20. Das Tragorgan 20 ist nach Art eines Doppelkettenförderers ausgebildet, indem es über zwei parallele, voneinander beabstandete umlaufende Förderketten 21 und eine Vielzahl diese verbindende, quer zur Transportrichtung 12 verlaufende Tragmittel aufweist. Diese Tragmittel sind im in den Figuren gezeigten Ausführungsbeispiel als Querstäbe 22 ausgebildet. Die die Förderketten 21 verbindenden Querstäbe 22 sind mit einem relativ geringen Abstand zueinander angeordnet, der kleiner ist als die zu transportierenden Eier 11, und zwar derart, dass auch kleinere Eier nicht zwischen zwei parallelen Querstäben 22 hindurchfallen können.

Die endlos geführten parallelen Förderketten 21 liegen in parallelen, vertikalen Ebenen. Die Förderketten 21 werden am Anfang 13 und am Ende 14 der Förderstrecke 10 um 180° umgelenkt. Dadurch werden ein Obertrum 23 und ein mit geringem Abstand darunterliegendes Untertrum 24 des Eierförderers gebildet, die durch die Umlenkungen am Anfang 13 und am Ende 14 der Förderstrecke 10 verbunden sind. Das Obertrum 23 - gebildet aus den oberen Strängen beider parallel aneinanderliegender Förderketten 21 und die diese verbindenden Querstäbe 22 - nimmt die in Transportrichtung 12 weiterzutransportierenden Eier 11 auf und bildet somit das zum Weitertransport längs der Förderstrecke 11 dienende Tragorgan 20 des Eierförderers bzw. Eierkettenförderers. Dabei ruhen die Eier 11 auf den die Oberseite des Obertrums 23 bildenden Querstäben 22. Das Untertrum 24 des Tragorgans 20 des Eierförderers läuft vom Ende 14 der Förderstrecke 10 bis zum Anfang 13 derselben leer gegen die Transportrichtung 12 zurück zum Anfang 13 der Förderstrecke 10.

Das Obertrum 23 des Tragorgans 20 des Eierförderers aus den parallelen Förderketten 21 und den diese verbindenden Querstäben 22 ist oben auf dem Traggerüst 19 durch bei Kettenförderern übliche Führungen geführt. Gleiches kann für das Untertrum 24 gelten, das beabstandet vom Obertrum 23 im unteren Bereich des Traggerüsts 19 ebenfalls geführt bzw. abgestützt sein kann.

Bei den Förderketten 21 handelt es sich bevorzugt um gleichermaßen ausgebildete Rundstahlketten für Stetigförderer, und zwar vorzugsweise lehrenhaltige Rundstahlketten gemäß DIN 762, 764 und/oder 766 bzw. vergleichbare und/oder diese ersetzende aktuellere Normen. Die Teilung der Kettenglieder kann die 314-fache oder 5-fache Nenndicke der Kettenglieder betragen. Bevorzugt eignet sich die Erfindung für sogenannte langgliedrige Rundstahlketten mit einer Teilung, die dem 5-fachen der Nenndicke der Kettenglieder entspricht.

Die beiden parallel zueinander in senkrechten Ebenen verlaufenden gleichen Förderketten 21 verfügen über abwechselnd aufeinanderfolgende stehende aufrechte Kettenglieder 25 und liegende, flache Kettenglieder 26. Die aufrechten Kettenglieder 25 und flachen Kettenglieder 26 beider Förderketten 21 sind in Führungsbahnen des Traggerüsts 19 geführt, so dass die Förderketten 21 während ihres Umlaufs die Ausrichtung ihrer aufrechten Kettenglieder 25 und flachen Kettenglieder 26 im Wesentlichen beibehalten.

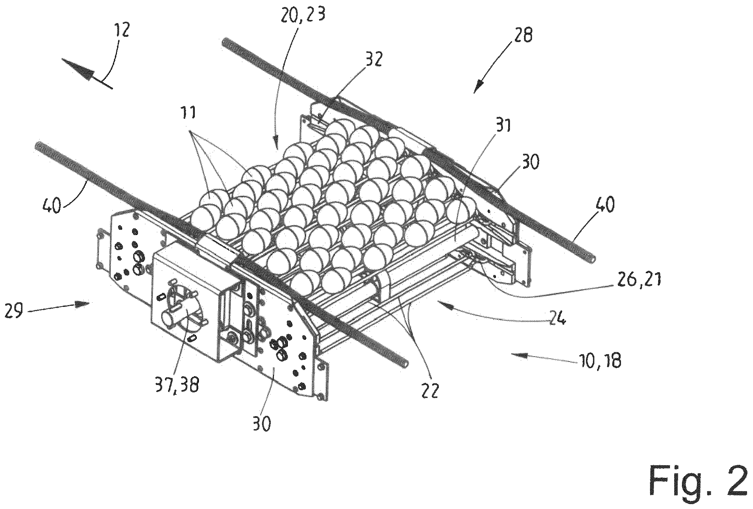

Die parallel quer zur Transportrichtung 12 verlaufenden Querstäbe 22 sind mit den Kettengliedern 25, 26 der Förderketten 21 an ihren gegenüberliegenden Enden fest verbunden. Es ist jedem Kettenglied 25, 26 ein Querstab 22 zugeordnet (Fig. 2). Die gegenüberliegenden Enden derjenigen Querstäbe 22, die mit flachen Kettengliedern 26 verbunden sind, sind gekröpft bzw. abgewinkelt, so dass alle mit den flachen Kettengliedern 26 und den aufrechten Kettengliedern 25 verbundenen Querstäbe 22 oberseitig in einer gemeinsamen Ebene liegen, nämlich der Ebene des Obertrums 23 bzw. des Untertrums 24.

Der Eierförderer verfügt über einen Hauptantrieb 27, der an einem Ende der Förderstrecke 10 angeordnet sein kann. Im gezeigten Ausführungsbeispiel (Fig. 1) befindet sich der Hauptantrieb 27 am Anfang 13 der Förderstrecke 10. Zusätzlich verfügt der Eierförderer über einen Zwischenantrieb 28, der zwischen den gegenüberliegenden Enden der Förderstrecke 10 angeordnet ist. Beim Ausführungsbeispiel der Fig. 2 befindet sich der Zwischenantrieb 28 im Bereich des längeren geraden Abschnitts 18 der Förderstrecke 10. Der Zwischenantrieb 28 kann aber auch an einer Stelle im Verlauf der Förderstrecke 10 angeordnet sein. Bei längeren Förderstrecken ist es denkbar, mehrere vorzugsweise gleiche Zwischenantriebe 28 dem Eierförderer zuzuordnen. Auch wäre es denkbar, zwei Hauptantriebe 27 am Anfang 13 und am Ende 14 der Förderstrecke 10 vorzusehen.

Der Zwischenantrieb 28 verfügt über einen dreidimensionalen Rahmen 29 mit zwei parallelen, vorzugsweise gleichen Stirnplatten 30 und mehreren diese verbindenden Querstangen 31. Die beiden beabstandeten Stirnplatten 30 liegen in zwei parallelen, vertikalen Ebenen. Der Abstand dieser Ebenen und der Stirnplatten 30 ist so gewählt, dass sich diese außenseitig an den beiden parallelen Förderketten 21 entlang erstrecken. Dadurch verlaufen die Stirnplatten 30 in Transportrichtung 12 und die die Stirnplatten 30 verbindenden Querstangen 31 quer zur Transportrichtung 12. Die Querstangen 31 sind so positioniert, dass sie zwischen den das Obertrum 23 und den das Untertrum 24 verlaufenden Strängen der Förderketten 21 liegen. Die Stirnplatten 30 weisen innenseitige Führungsnuten 32 und 33 für die zum Obertrum 23 und zum Untertrum 24 gehörenden Stränge der Förderketten 21 auf. Die Führungsnuten 32 und 33 für das Obertrum 23 und das Untertrum 24 sind so gebildet, dass in diese außen gegenüber den aufrechten Kettengliedern 25 vorstehenden Abschnitte der flachen Kettenglieder 26 eingreifen.

Im Bereich des Zwischenantriebs 28 weist das Obertrum 23 eine nach oben gerichtete bogenförmige Erhöhung 34 auf. Im gezeigten Ausführungsbeispiel verfügt auch das Untertrum 24 über eine solche Erhöhung, bei der es im Fall des Untertrums 24 um eine nach unten weisende bogenförmige Auslenkung 35 handelt. Die bogenförmige Auslenkung 35 des Untertrums 24 ist beim hier gezeigten Zwischenantrieb 28 geringer als die bogenförmige Erhöhung 34. Es ist auch denkbar, dass das Untertrum 24 im Bereich des Zwischenantriebs 28 geradlinig verläuft, also die bogenförmige Auslenkung 35 fehlt. Infolge der bogenförmigen Erhöhung 34 und/oder der bogenförmigen Auslenkung 35 werden im Bereich des Zwischenantriebs, insbesondere einem mittleren Abschnitt desselben, der Abstand zwischen dem Obertrum 23 und dem Untertrum 24 des umlaufend angetriebenen Tragorgans 20 des Eierförderers vergrößert.

Der Zwischenantrieb 28 verfügt des Weiteren über zwei identische Antriebszahnräder 36, die im Fachjargon auch als "Kettennüsse" bezeichnet werden. Die beiden voneinander beabstandeten parallelen Antriebszahnräder 36 sind verbunden durch eine Antriebswelle 37. Diese Verbindung ist derart getroffen, dass die Antriebszahnräder 36 unverdrehbar und unverschiebbar auf der Antriebswelle 37 fixiert sind. Ein Ende der Antriebswelle 37 ragt nach außen gegenüber einer Stirnplatte 30 vor. Dadurch wird ein Antriebsstummel 38 der Antriebswelle 37 geschaffen. Diesem Antriebsstummel 38 ist ein in den Figuren nicht gezeigter Antrieb zugeordnet. Hierbei handelt es sich bevorzugt um einen Getriebemotor aus einem Elektromotor und einem diesem zugeordneten Untersetzungsgetriebe zur Reduzierung der Drehzahl des Elektromotors auf die deutlich geringere Fördergeschwindigkeit des Eierförderers. Der Elektromotor ist vorzugsweise als drehzahlveränderlicher Elektromotor ausgebildet.

Die beiden gleichen beabstandeten Antriebszahnräder 36 sind als einreihige Antriebszahnräder 36 mit nur einer einzigen Zahnreihe ausgebildet. Die Antriebszahnräder 36 liegen in parallelen vertikalen Ebenen, die deckungsgleich mit den parallelen vertikalen Ebenen der umlaufenden Förderketten 21 sind. Dadurch können die untereinander gleichen Zähne 39 beider Antriebszahnräder 36 abwechselnd in den Innenraum eines flachliegenden Kettenglieds 36 eingreifen. Bei den in vertikalen Ebenen angeordneten Antriebszahnrädern 36 verläuft eine horizontale Drehachse der Antriebswelle 37 quer zur Transportrichtung 12 des Eierförderers.

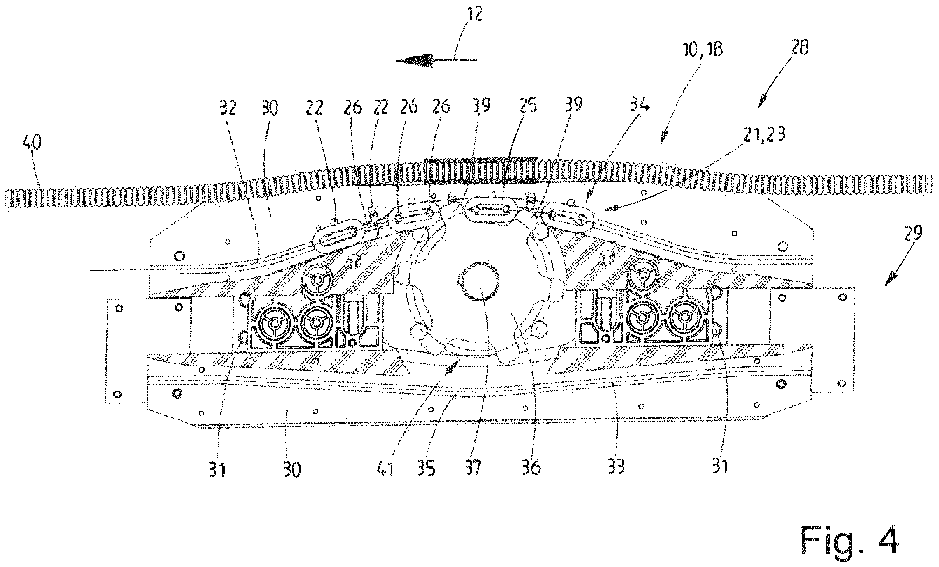

Die Antriebszahnräder 36 und die diese verbindende Antriebwelle 37 sind zwischen den das Obertrum 23 bildenden Strängen der Förderketten 21 und den das Untertrum 24 bildenden Strängen der Förderkette 21 angeordnet. Infolge der im Obertrum 23 bogenförmigen Erhöhung 34 der Stränge der Förderketten 21 im Bereich des Zwischenantriebs 28 und/oder der bogenförmigen Auslenkung 35 im Bereich der Stränge der Förderketten 21 des Untertrums 24 wird der Abstand des Obertrums 23 zum Untertrum 24 im Bereich des Zwischenantriebs 28 vergrößert und dadurch Platz zur Anordnung der Antriebszahnräder 36 zwischen den Strängen der Förderketten 21 des Obertrums 23 und des Untertrums 24 geschaffen. Dieser Platz bzw. Raum ist so groß, dass die Antriebszahnräder 36 stets nur entweder mit den oberen Strängen der Förderketten 21 im Bereich des Obertrums oder den unteren Strängen der Förderketten 21 im Bereich des Untertrums 24 kämmen. Dadurch treibt der Zwischenantrieb 28 entweder die Förderketten 21 im Bereich des Obertrums 23 oder des Untertrums 24 an (Fig. 4, 5 und 6).

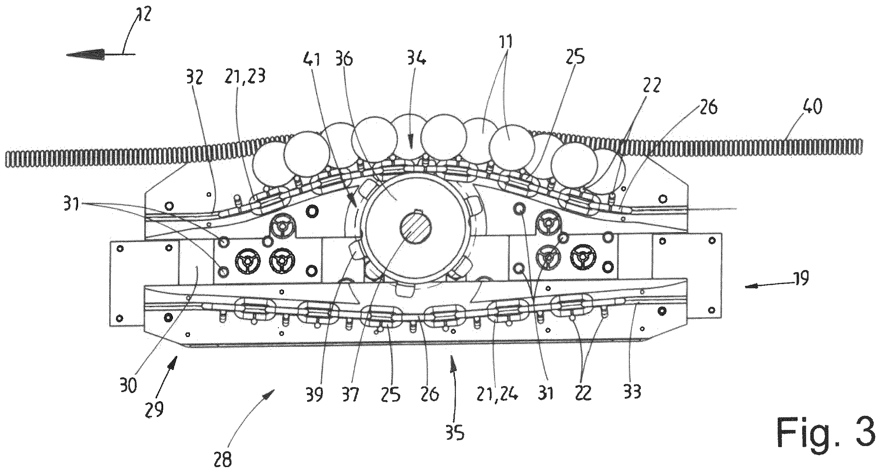

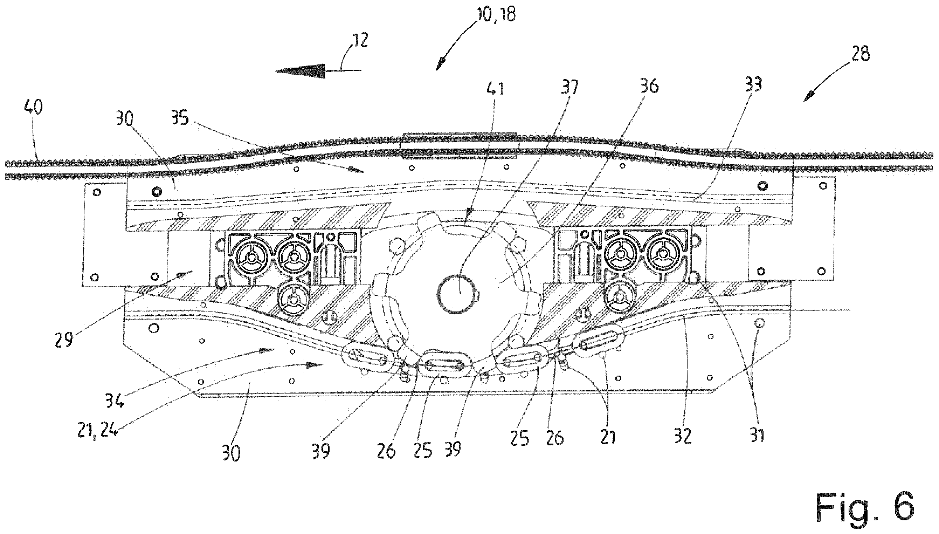

Die Lagerung der Antriebswelle 37 der beiden beabstandeten parallelen Antriebszahnräder 36 an den gegenüberliegenden Stirnplatten 30 ist veränderlich, wodurch die Antriebswelle 37 mit den Antriebszahnrädern 36 und dem Antrieb zwischen den Förderketten 21 des Obertrums 23 und des Untertrums 24 in der Höhe veränderlich ist. Dadurch sind die Antriebszahnräder 26 wahlweise mit den Förderketten 21 des Obertrums 23 (Fig. 3 bis 5) oder den Förderketten 21 des Untertrums 24 (Fig. 6) ankoppelbar, so dass die Zähne 39 der Antriebszahnräder 36 nacheinander entweder in flachliegende Kettenglieder 26 der Förderketten 21 des Obertrums 23 oder flachliegende Kettenglieder 26 der Förderketten 21 des Untertrums 24 eingreifen. Dadurch ist es möglich, vom Zwischenantrieb 28 entweder nur das Obertrum 23 oder das Untertrum 24 des Eierförderers anzutreiben. Wenn zum Beispiel die Antriebszahnräder 36 des Zwischenantriebs 28 an die Förderketten 21 des Obertrums 23 angekoppelt sind, kommen die Zähne 39 der Antriebszahnräder 36 nicht mit den flachliegenden Kettengliedern 26 des Untertrums 24 in Kontakt (Fig. 3).

Im Folgenden wird die Ausbildung der gleichen Antriebszahnräder 36, insbesondere ihrer Zähne 39 in Verbindung mit den Darstellungen der Fig. 3 bis 5, also dem vom Zwischenantrieb 28 angetriebenen Obertrum 23 des Eierförderers erläutert.

Beim in den Figuren gezeigten Zwischenantrieb 28 weist jedes Antriebszahnrad 36 eine gerade Anzahl von sechs identischen Zähnen 39 auf. Gegebenenfalls können die Antriebszahnräder 36 auch über eine größere oder kleinere Anzahl von Zähnen 39 verfügen, wobei sie auch eine ungerade Anzahl von Zähnen 39 aufweisen können. Bevorzugt sollte die Anzahl gleicher Zähne 39 jedes Antriebszahnrads 36 zwischen fünf und neun liegen, wobei sie auch über acht gleiche Zähne 39 verfügen können.

Jeder der gleichen Zähne 39 beider Antriebszahnräder 36 verfügt über eine Breite, die der Innenbreite der Kettenglieder der Förderketten 21 entspricht. Die Dicke jedes Zahns 39 beträgt das Maß der Teilung der Förderketten 21 abzüglich dem doppelten Durchmesser der Kettenglieder 25, 26. Das entspricht der inneren Länge des jeweiligen Kettenglieds 26 abzüglich der Abschnitte der beiden an gegenüberliegenden Enden in das Kettenglied 26 eingreifenden benachbarten aufrechten Kettenglieder 25. Die Höhe jedes Zahns 39 entspricht der 0,8-fachen bis 1,4-fachen Breite des jeweiligen Kettenglieds 25, 26, insbesondere der 0,9-fachen bis 1,2-fachen Breite des jeweiligen Kettenglieds 25, 26 und/oder dem 0,7-fachen bis 0,95-fachen der Dicke des jeweiligen Zahns 39. Jeder Zahn 39 ist an seinem Kopf und am Fuß leicht gerundet. Der Radius der Rundung am Fuß des jeweiligen Zahns 39 entspricht der 0,4-fachen bis 0,5-fachen Breite des jeweiligen Kettenglieds 25, 26.

Die gleichen Außendurchmesser jedes Antriebszahnrads 36 entsprechen vorzugsweise dem lichten (inneren) Abstand der Förderketten 21 des Obertrums 23 oder des Untertrums 24 im Bereich der Längsmittelachse der Antriebswelle 37. Der lichte Abstand der Trume der Förderkette 21 des Obertrums 23 und des Untertrums 24 kann aber auch um bis zu 20% größer oder kleiner sein als der Außendurchmesser des jeweiligen Antriebszahnrads 36. Wenn gemäß den Fig. 3 bis 5 die Antriebszahnräder 36 mit den Förderketten 21 des Obertrums 23 kämmen ist die mittige Drehachse der Antriebswelle 37 von den Förderketten 21 des Untertrums 24 weiter beabstandet als von den Förderketten 21 des Obertrums 23, und zwar so weit, dass die Zähne 39 der Antriebszahnräder 36 im Falle des Antriebs der Förderketten 21 des Obertrums 23 nicht mit dem Untertrum 24 in Kontakt geraten. Umgekehrt verhält es sich im Falle des Antriebs der Förderketten 21 des Untertrums 24 gemäß der Darstellung in der Fig. 6. Hier ist die Antriebswelle 37 mit den beiden Antriebszahnrädern 36 und dem Antrieb in den beiden seitlichen Stirnplatten 30 nach unten verschoben, so dass die Zähne 39 nur mit den flachliegenden Kettengliedern 26 der Förderketten 21 des Untertrums 24 kämmen.

Im Bereich des Zwischenantriebs 28 sind die entsprechenden Stränge der Förderketten 21 des Obertrums 23 entlang der bogenförmigen Erhöhung 34 angehoben und das Untertrum 24 im Bereich der bogenförmigen Auslenkung 35 nach unten ausgelenkt. In der Darstellung der Fig. 4 ist die obere bogenförmige Erhöhung 34 stärker ausgeprägt als die untere bogenförmige Auslenkung 35. Die obere bogenförmige Erhöhung 34 entspricht vorzugsweise etwa der doppelten äußeren Breite eines Kettenglieds 25, 26. Sie kann aber auch das 1,8-fache bis 2,6-fache der äußeren Breite eines Kettenglieds 25, 26 sein.

Die vorstehend Bemessungsbereiche müssen so getroffen sein, dass beim Eingreifen der Zähne 39 der Antriebszahnräder 36 in die flachliegenden Kettenglieder 26 der Förderketten 21 des Obertrums 23 die Zähne 39 der Antriebszahnräder 36 in die flachen Kettenglieder 26 der Förderketten 21 des Untertrums 24 nicht eingreifen.

Aufgrund der vorstehend beschriebenen Bemessungen und/oder Bemessungsgrundlagen der Antriebszahnräder 36, insbesondere ihrer Zähne 39, und der bogenförmigen Erhöhung 34 sowie bogenförmigen Auslenkung 35 kann jeweils ein senkrecht über der Drehachse der Antriebswelle 37 stehender Zahn 39 jedes Antriebszahnrads 36 durch ein darüberliegendes flaches Kettenglied 26 der jeweiligen Förderkette 21 hindurchtreten und dabei der Querschnitt des jeweiligen Zahns 39 dem Innenraum des von ihnen durchgriffenen flachen Kettenglieds 26 so weit ausfüllen, dass nur ein sehr geringes Spiel des jeweiligen Zahns 39 im Innenraum des von ihm durchgriffenen flachen Kettenglieds 26 besteht. Dabei liegen die gegenüberliegenden Seiten des jeweiligen Zahns 39 innen am flachliegenden Kettenglied 26 an, während die gegenüberliegenden Zahnflanken sich an den vordersten Stellen der an gegenüberliegenden Enden in das flache Kettenglied 26 eingreifenden benachbarten aufrechten Kettengliedern 25 abstützen. In Transportrichtung 12 gesehen drücken die vorderen Zahnflanken des jeweiligen Zahns 39 an das davorliegende aufrechte Kettenglied 25. Der jeweilige Zahn 39 durchgreift das jeweilige flachliegende Kettenglied 26 sowohl zwängungs- als auch spielfrei und stützt sich dabei am in Transportrichtung 12 davorliegenden aufrechten Kettenglied 25 zum Weitertransport der Förderketten 21 ab.

Vor allem die Fig. 4 bis 6 zeigen eine Stellung eines Antriebszahnrads 36, bei der zwei benachbarte Zähne 39 desselben teilweise in zwei aufeinanderfolgende flachliegende Kettenglieder 26 eingreifen, sich also vor und hinter einer vertikalen Ebene durch die Drehachse der Antriebswelle 37 befinden. Aus den Fig. 4 bis 6 wird erkennbar, dass in Transportrichtung 12 gesehen ein schon hinter der vertikalen Ebene durch die Drehachse sich befindender Zahn 39 sich allmählich aus dem ihm zugeordneten flachliegenden Kettenglied 26 herauszieht, während der nachfolgende Zahn 39 beginnt, in das nächste flachliegende Kettenglied 26 einzutauchen. Infolge der bogenförmigen Erhöhung 34 hat die jeweilige Förderkette 21 des Obertrums 23 einen bogenförmigen Verlauf über das Antriebszahnrad 36 hinweg. Das führt zu einer Erhöhung des Überdeckungsgrads bzw. Überdeckungsverhältnisses der Antriebszahnräder 36. Die Folge ist, dass der aus einem flachliegenden Kettenglied 26 sich herausbewegende Zahn 39 und gleichzeitig der nachfolgende, sich in das nächste flachliegende Kettenglied 26 hineinbewegende Zahn 39 sich mit ihrer vorderen Zahnflanke an einem davorliegenden aufrechten Kettenglied 25 abstützen. In der Phase des Ein- und Austretens eines Zahns 39 in ein jeweiliges flachliegendes Kettenglied 26 stützen sich die vorderen Zahnflanken dieser Zähne 39 an zwei aufeinanderfolgenden aufrechten Kettengliedern 25 ab. Erst wenn ein Zahn 39 nahezu vollständig in den Innenraum eines flachliegenden Kettenglieds 26 eingetreten ist, stützt sich nun auch dieser Zahn 39 am davorliegenden aufrechten Kettenglied 25 ab, aber nun größtenteils bzw. vollständig.

Infolge der hügelartigen bogenförmigen Erhöhung 34 des Obertrums 23 im Bereich des Zwischenantriebs 28 kommt es zur größeren bzw. vergrößerten Überdeckung bzw. einem vergrößerten Überdeckungsverhältnis des Eingriffs von Zähnen 39 der Antriebszahnräder 36 in die Förderketten 21. Das hat einen gleichmäßigen und ruckfreien Antrieb der Förderketten 21 zur Folge, woraus ein sanfter Antrieb des Eierförderers resultiert. Das führt zu einer größtmöglichen Schonung der empfindlichen Eier 11. Dadurch lässt sich der mindestens eine Zwischenantrieb 28 zusätzlich zum Hauptantrieb 27 der Förderstrecke 10 zuordnen, ohne dass durch die Mehrfachantriebe der schonende Transport der Eier 11 beeinträchtigt wird.

Beim gemäß der Fig. 4 erfolgenden teilweisen Eingreifen benachbarter Zähne 39 des jeweiligen Antriebszahnrads 36 in flache Kettenglieder 26 liegt das dazwischen sich befindende aufrechte Kettenglied 25 in einer Mulde 41 bzw. Zahnlücke zwischen aufeinanderfolgenden Zähnen 39. Die Mulde 41 bildet den Zahngrund zwischen benachbarten Zähnen 39. Die Tiefe der Mulde 41 ist so ausgebildet, dass darin ein aufrechtes Kettenglied 25 zwängungsfrei, insbesondere mit ausreichendem Spiel, Aufnahme findet. Dadurch wird sichergestellt, dass nur die in flache Kettenglieder 26 eingreifenden Zähne 39 mit den Förderketten 21 in Kontakt treten und die Zähne 39 ausreichend tief ungehindert in die flachliegenden Kettenglieder 26 eingreifen können. Die Kraftübertragung von den Antriebszahnrädern 36 auf die Förderketten 21 erfolgt ausschließlich durch solche Zähne 39 beider Antriebszahnräder 36, die sich an dem sich durch jeweils ein flachliegendes Kettenglied 26 erstreckenden Teil des jeweils vor einem Zahn 39 anliegenden aufrechten Kettenglied 25 abstützen.

Auf den Rändern der gegenüberliegenden Stirnplatten 30 des Zwischenantriebs 28 sind elastische Schläuche 40 aufgesteckt. Hierbei kann es sich um Gummi- oder Kunststoffschläuche handeln. Die Schläuche 40 erstrecken sich vorzugsweise auch über die Seiten des Traggerüsts 19 hinweg. Die Schläuche 40 begrenzen dadurch gegenüberliegende Ränder des Obertrums 23 des Eierförderers. Dadurch dienen die Schläuche 40 zur beidseitigen Führung der Eier 11 auf dem Obertrum 23. Gleichzeitig schützen die weichen Schläuche 40 die Eier 11 während des Weitertransports entlang der Förderstrecke 10 gegen Beschädigungen.

Die Darstellung der Fig. 4 zeigt den das Obertrum 23 des Eierförderers antreibenden Zwischenantrieb 28. Dabei laufen die oberen Stränge der Förderketten 21 im Bereich des Zwischenantriebs 28 über die bogenförmige Erhöhung 34, welche die Förderketten 21 stärker auslenkt als die untere flachere bogenförmige Auslenkung 35.

Durch Verlagern der Antriebswelle 37 mit den darauf befestigten Antriebszahnrädern 36 und dem Antrieb nach unten in Richtung zum Untertrum 24 gelangen die Zähne 39 der Antriebszahnräder 36 in kämmenden Eingriff mit den sich im Bereich des Zwischenantriebs 28 befindenden Abschnitten der Stränge des Untertrums 24 der Förderketten 21. Ein Eingriff der Zähne 39 in die oberen Stränge der Förderketten 21 ist dann nicht mehr gegeben. Es werden somit bei nach unten verlagerten Antriebszahnrädern 36 die unteren Stränge der Förderketten 21 vom Zwischenantrieb 28 angetrieben, aber nicht die oberen Stränge der Förderketten 21.

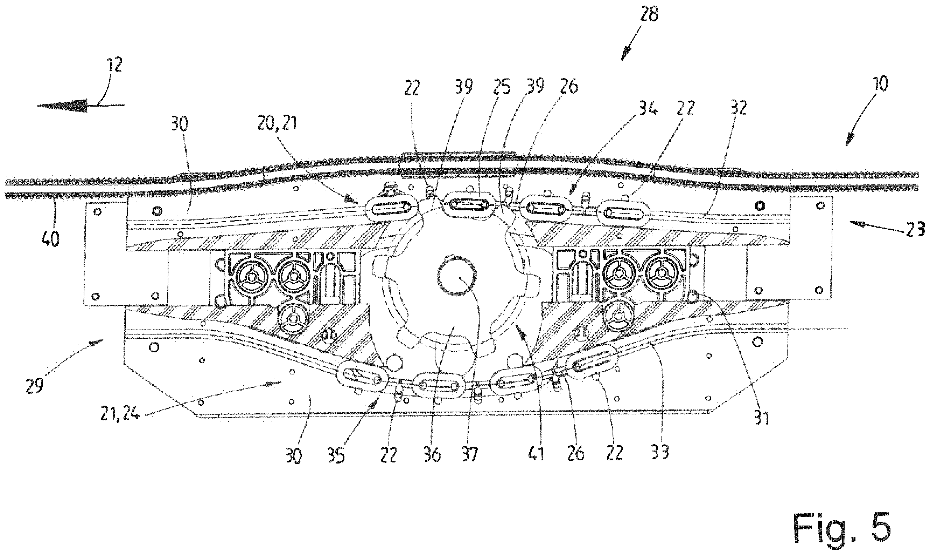

Die Fig. 5 zeigt wiederum den Antrieb der oberen Stränge der Förderketten 21 vom Zwischenantrieb 28. Jedoch laufen hier die Förderketten 21 im Bereich des Obertrums 23 über die in der Fig. 4 untenliegende flachere bogenförmige Auslenkung 35. Das wird erreicht durch ein Umdrehen des gesamten Zwischenantriebs 28 um eine horizontale Drehachse. Dann erhält im Bereich des Zwischenantriebs 28 durch die nach dem Umdrehen obenliegende bogenförmigen Auslenkung 35 das Obertrum 23 einen flacheren bogenförmigen Hügel bzw. eine flachere bogenförmige Erhöhung. Das führt dazu, dass der Umschlingungswinkel der Antriebszahnräder 36 von den Förderketten 21 kleiner als bei der Anordnung des Zwischenantriebs 28 gemäß der Fig. 4 wird. Nach dem Umdrehen des Zwischenantriebs 28 führt die dann untenliegende bogenförmige Erhöhung 34 zur stärkeren Auslenkung des Untertrums 24 im Bereich des Zwischenantriebs 28.

Die Fig. 6 zeigt die im Vergleich zur Fig. 5 durch Absenken der Antriebszahnräder 36 mit der Antriebswelle 37 und dem Antrieb erfolgenden Ankopplung der Antriebszahnräder 36 an die Stränge der Förderketten 21 des Untertrums 24. Dann wird das Untertrum 24 stärker umgelenkt als das Obertrum 23, so dass der Umschlingungswinkel des Untertrums 24 nach dem Umrüsten des Zwischenantriebs 28 gemäß der Fig. 6 größer ist im Vergleich zum Antrieb der Förderketten 21 im Bereich des Obertrums 23 gemäß der Fig. 5.

### Bezugszeichenliste:

- 10: Förderstrecke
- 11: Ei
- 12: Transportrichtung
- 13: Anfang
- 14: Ende
- 15: gerader Abschnitt
- 16: 90°-Bogen
- 17: Steigungsabschnitt
- 18: gerader Abschnitt
- 19: Traggerüst
- 20: Tragorgan
- 21: Förderkette
- 22: Querstab
- 23: Obertrum
- 24: Untertrum
- 25: aufrechtes Kettenglied
- 26: flachliegendes Kettenglied
- 27: Hauptantrieb
- 28: Zwischenantrieb
- 29: Rahmen
- 30: Stirnplatte
- 31: Querstange
- 32: Führungsnut
- 33: Führungsnut
- 34: bogenförmige Erhöhung
- 35: bogenförmige Auslenkung
- 36: Antriebszahnrad
- 37: Antriebswelle
- 38: Antriebsstummel
- 39: Zahn
- 40: Schlauch
- 41: Mulde

## Patentansprüche

1. Eierförderer mit zwei entlang einer Förderstrecke (10) verlaufenden parallelen, beabstandeten und endlosen Förderketten (21), die durch quer zur Förderstrecke (10) verlaufende längliche stangen- oder rohrartige Tragmittel verbunden sind, und mit einem Hauptantrieb (27), der die Förderketten (21) gemeinsam gleichermaßen umlaufend antreibt, **dadurch gekennzeichnet, dass** im Verlauf der Förderstrecke (10) wenigstens ein Zwischenantrieb (28) angeordnet ist, im Bereich des oder jedes Zwischenantriebs (28) der Abstand zwischen einem Obertrum (23) und einem Untertrum (24) und/oder oberen und unteren Strängen jeder endlos umlaufenden Förderkette (21) vergrößert ist durch eine hügelartige bzw. bogenförmige Erhöhung (34) des Obertrums (23) und/oder eine hügelartige bzw. bogenförmige Auslenkung (35) des Untertrums (24), die eine solche Höhe bzw. Größe aufweisen, dass Zähne (39) von Antriebszahnrädern (36) entweder nur mit Kettengliedern (26) der oberen Stränge des Obertrums (23) oder der unteren Stränge im Bereich des Untertrums (24) der Förderketten (21) in Eingriff gelangen können.

2. Eierförderer nach Anspruch 1, **dadurch gekennzeichnet, dass** der Zwischenantrieb (28) zwei Antriebszahnräder (36) aufweist, die im kämmenden Eingriff mit den beiden parallelen Förderketten (21) stehen und unverdrehbar auf einer gemeinsamen, drehend antreibbaren Antriebswelle (37) angeordnet sind, wobei vorzugsweise Längsmittelachsen der Antriebszahnräder (36) auf einer Drehachse der Antriebswelle (37) liegen.

3. Eierförderer nach Anspruch 1 oder 2, **dadurch gekennzeichnet, dass** die Antriebszahnräder (36) jeweils mehrere gleiche Zähne (39) aufweisen, die von der Seite gesehen, insbesondere in Richtung der Drehachse der Antriebswelle (37) gesehen, ein Zahnprofil aufweisen, das zwängungsfrei ein jeweiliges Kettenglied (25, 26) der Förderkette (21) ausfüllt.

4. Eierförderer nach einem der vorhergehenden Ansprüche, **dadurch gekennzeichnet, dass** jeder Zahn (39) der Antriebszahnräder (36) eine Zahndicke aufweist, die einer inneren Länge des jeweiligen mit dem Zahn (39) in Eingriff stehenden Kettenglieds (26) abzüglich der doppelten Dicke eines Kettenglieds (25, 26) aufweist und/oder der Teilung der Kettenglieder (25, 26) der Förderketten (21) abzüglich der doppelten Dicke eines jeweiligen Kettenglieds (25, 26) entspricht.

5. Eierförderer nach einem der vorhergehenden Ansprüche, **dadurch gekennzeichnet, dass** der Abstand benachbarter Zähne (39) der Antriebszahnräder (36) doppelt so groß ist wie die Teilung der Kettenglieder (25, 26) der Förderketten (21) und/oder ein jeweiliger Zahn (39) nur in jedes zweite Kettenglied (26) eingreift.

6. Eierförderer nach einem der vorhergehenden Ansprüche, **dadurch gekennzeichnet, dass** jedes Antriebszahnrad (36) fünf bis neun gleiche Zähne (39) aufweist, vorzugsweise über sechs oder acht gleiche Zähne (39) verfügt.

7. Eierförderer nach einem der vorhergehenden Ansprüche, **dadurch gekennzeichnet, dass** die Zähne (39) der Antriebszahnräder (36) von der Seite gesehen ein rechteckiges Profil aufweist, bei vorzugsweise einer das 0,7-fache bis 0,9-fache der Zahndicke aufweisenden Zahnhöhen.

8. Eierförderer nach einem der vorhergehenden Ansprüche, **dadurch gekennzeichnet, dass** die Zähne (39) der Antriebszahnräder (36) an den Übergängen der Zahnflanken sowie Zahnspitzen und/oder den Übergängen der Zahnflanken zu den Zahnfüßen abgerundet und/oder abgeschrägt sind, vorzugsweise ein Radius der Abrundungen der Zahnfüße jedes Zahns (39) der 0,4-fachen bis 0,5-fachen Breite eines jeweiligen Kettenglieds (25, 26) der Förderketten (21) entspricht.

9. Eierförderer nach einem der vorhergehenden Ansprüche, **dadurch gekennzeichnet, dass** die Zähne (39) der Antriebszahnräder (36) eine Höhe aufweisen, die dem 0,8-fachen bis 1 ,2-fachen der äußeren Breite der Kettenglieder (25, 26) der Förderketten (21) entspricht.

10. Eierförderer nach einem der vorhergehenden Ansprüche, **dadurch gekennzeichnet, dass** der wenigstens eine Zwischenantrieb (28) zwischen dem Obertrum (23) und dem Untertrum (24) der Förderstrecke (10) angeordnet ist, vorzugsweise die beiden mit Abstand parallel nebeneinander verlaufenden Antriebszahnräder (36) zwischen oberen Strängen des Obertrums (23) und unteren Strängen des Untertrums (24) der parallelen umlaufenden Förderketten (21) angeordnet sind.

11. Eierförderer nach einem der vorhergehenden Ansprüche, **dadurch gekennzeichnet, dass** die Zähne (39) der Antriebszahnräder (36) des wenigstens einen Zwischenantriebs (28) wahlweise mit dem Obertrum (23) oder dem Untertrum (24), insbesondere den oberen Strängen der Förderketten (21) oder den unteren Strängen der Förderketten (21), in Eingriff bringbar sind.

12. Eierförderer nach einem der vorhergehenden Ansprüche, **dadurch gekennzeichnet, dass** der Außendurchmesser der gleich ausgebildeten Antriebszahnräder (36) dem 0,8-fachen bis 1,4-fachen inneren Abstand zwischen dem Obertrum (23) und dem Untertrum (24) im Bereich des Zwischenantriebs (28) und/oder dem Abstand zwischen den oberen und unteren Strängen der Förderketten (21) außerhalb des Bereichs des mindestens einen Zwischenantriebs (28) entspricht.

13. Eierförderer nach einem der vorhergehenden Ansprüche, **dadurch gekennzeichnet, dass** die hügelartige bzw. bogenförmige Erhöhung (34) bzw. Auslenkung (35) des Obertrums (23) und des Untertrum (24), insbesondere der Stränge der Förderketten (21) des Obertrums (23) bzw. des Untertrums (24), unterschiedlich stark ausgeprägt sind, insbesondere unterschiedliche Höhen aufweisen.

14. Eierförderer nach einem der vorhergehenden Ansprüche, **dadurch gekennzeichnet, dass** die Förderketten (21) als Rundgliederketten bzw. Rundstahlketten mit gleichen miteinander verketteten und abwechselnd aufrechten Kettengliedern (25) und flachliegenden Kettengliedern (26) ausgebildet sind, insbesondere die Rundgliederketten bzw. Rundstahlketten als lehrenhaltige langgliedrige Förderketten (21) ausgebildet sind, wobei vorzugsweise die Zähne (39) der Antriebszahnräder (36) abwechselnd in aufeinanderfolgende flache, liegende Kettenglieder (36) eingreifen.

## Claims

1. Egg conveyor having two continuous conveyor chains (21) which are spaced apart, run in parallel along a conveyor section (10) and are connected by elongate bar-shaped or tubular support means running transversely to the conveyor section (10), and having a main drive (27) which drives the conveyor chains (21) conjointly in a uniformly revolving manner, **characterized in that** at least one intermediate drive (28) is disposed in the course of the conveyor section (10), the spacing between an upper run (23) and a lower run (24) and/or upper strands and lower strands of each continuously revolving conveyor chain (21) in the region of the, or each, intermediate drive (28) is enlarged by a hump-shaped or arcuate elevation (34) of the upper run (23) and/or a hump-shaped or arcuate deflection (35) of the lower run (24), said elevation (34) and/or deflection (35) having such a height or size that teeth (39) of drive gears (36) can engage either only with chain links (26) of the upper strands of the upper run (23) or of the lower strands in the region of the lower run (24) of the conveyor chains (21).

2. Egg conveyor according to Claim 1, **characterized in that** the intermediate drive (28) has two drive gears (36) which engage so as to mesh with the two parallel conveyor chains (21) and are disposed in a nonrotating manner on a common drive shaft (37) which is able to be driven in a rotating manner, wherein longitudinal central axes of the drive gears (36) preferably lie on a rotation axis of the drive shaft (37) .

3. Egg conveyor according to Claim 1 or 2, **characterized in that** the drive gears (36) each have a plurality of identical teeth (39) which, when viewed laterally, in particular viewed in the direction of the rotation axis of the drive shaft (37), have a tooth profile which fills a respective chain link (25, 26) of the conveyor chain (21) without constraint.

4. Egg conveyor according to one of the preceding claims, **characterized in that** each tooth (39) of the drive gears (36) has a tooth thickness which has an inner length of the respective chain link (26) engaging with the tooth (39) minus double the thickness of one chain link (25, 26) has and/or corresponds to the pitch of the chain links (25, 26) of the conveyor chains (21) minus double the thickness of a respective chain link (25, 26).

5. Egg conveyor according to one of the preceding claims, **characterized in that** the spacing of adjacent teeth (39) of the drive gears (36) is double the pitch of the chain links (25, 26) of the conveyor chains (21) and/or a respective tooth (39) engages only in every second chain link (26).

6. Egg conveyor according to one of the preceding claims, **characterized in that** each drive gear (36) has five to nine identical teeth (39), preferably possesses six or eight identical teeth (39).

7. Egg conveyor according to one of the preceding claims, **characterized in that** the teeth (39) of the drive gears (36), when viewed laterally, has a rectangular profile, in the case of preferably a tooth heights that is 0.7 times to 0.9 times the tooth thickness.

8. Egg conveyor according to one of the preceding claims, **characterized in that** the teeth (39) of the drive gears (36) at the transitions of the tooth flanks and tooth tips and/or the transitions of the tooth flanks to the tooth bases are rounded and/or bevelled, a radius of the roundings of the tooth bases of each tooth (39) preferably corresponds to 0.4 times to 0.5 times the width of a respective chain link (25, 26) of the conveyor chains (21).

9. Egg conveyor according to one of the preceding claims, **characterized in that** the teeth (39) of the drive gears (36) have a height which corresponds to 0.8 times to 1.2 times the external width of the chain links (25, 26) of the conveyor chains (21).

10. Egg conveyor according to one of the preceding claims, **characterized in that** the at least one intermediate drive (28) is disposed between the upper run (23) and the lower run (24) of the conveyor section (10), the two mutually spaced apart drive gears (36) running in parallel next to one another are preferably disposed between upper strands of the upper run (23) and lower strands of the lower run (24) of the parallel revolving conveyor chains (21).

11. Egg conveyor according to one of the preceding claims, **characterized in that** the teeth (39) of the drive gears (36) of the at least one intermediate drive (28) are able to be selectively brought to engage with the upper run (23) or the lower run (24), in particular the upper strands of the conveyor chains (21) or the lower strands of the conveyor chains (21).

12. Egg conveyor according to one of the preceding claims, **characterized in that** the external diameter of the identically configured drive gears (36) corresponds to 0.8 times to 1.4 times the inner spacing between the upper run (23) and the lower run (24) in the region of the intermediate drive (28) and/or the spacing between the upper and lower strands of the conveyor chains (21) outside the region of the at least one intermediate drive (28).

13. Egg conveyor according to one of the preceding claims, **characterized in that** the hump-shaped or arcuate elevation (34) or deflection (35) of the upper run (23) and of the lower run (24), in particular of the strands of the conveyor chains (21) of the upper run (23) or of the lower run (24) are of different intensity, in particular have different heights.

14. Egg conveyor according to one of the preceding claims, **characterized in that** the conveyor chains (21) are configured as round link chains, or round link steel chains, having identical alternatingly upright chain links (25), which are linked to one another, and lie-flat chain links (26), the round link chains or round link steel chains are configured as true-to-gauge, long-link conveyor chains (21), wherein the teeth (39) of the drive gears (36) preferably engage alternatingly in successive flat, lying chain links (36).

## Revendications

1. Convoyeur d'oeufs, comprenant deux chaînes de convoyage (21) parallèles, espacées et sans fin, s'étendant le long d'une voie de convoyage (10), qui sont reliées par des moyens de support allongés, en forme de barres ou de tubes, qui s'étendent transversalement à la voie de convoyage (10), et comprenant un entraînement principal (27) qui entraîne les chaînes de convoyage (21) ensemble en circulation identique,
**caractérisé en ce qu'**au moins un entraînement intermédiaire (28) est disposé le long de la voie de convoyage (10), dans la zone du ou de chaque entraînement intermédiaire (28), l'écartement entre un brin supérieur (23) et un brin inférieur (24) et/ou entre des lignes supérieures et inférieures de chaque chaîne de convoyage (21) circulant sans fin est augmenté par un relief (34) en forme de bosse ou d'arc du brin supérieur (23) et/ou par une déviation en forme de bosse ou d'arc (35) du brin inférieur (24), qui présentent une hauteur ou grandeur telle que des dents (39) de roues dentées d'entraînement (36) peuvent venir en prise uniquement avec des maillons de chaîne (26) soit des lignes supérieures du brin supérieur (23), soit des lignes inférieures dans la zone du brin inférieur (24) des chaînes de convoyage (21).

2. Convoyeur d'oeufs selon la revendication 1, **caractérisé en ce que** l'entraînement intermédiaire (28) présente deux roues dentées d'entraînement (36) qui s'engrènent avec les deux chaînes de convoyage parallèles (21) et sont disposées de manière verrouillée en rotation sur un arbre d'entraînement (37) commun, pouvant être entraîné en rotation, dans lequel de préférence les axes médians longitudinaux des roues dentées d'entraînement (36) se trouvent sur un axe de rotation de l'arbre d'entraînement (37).

3. Convoyeur d'oeufs selon la revendication 1 ou 2, **caractérisé en ce que** les roues dentées d'entraînement (36) présentent respectivement plusieurs dents identiques (39) qui, en vue latérale, en particulier en direction de l'axe de rotation de l'arbre d'entraînement (37), présentent un profil de dent qui comble sans contrainte un maillon de chaîne (25, 26) respectif de la chaîne de convoyage (21).

4. Convoyeur d'oeufs selon l'une quelconque des revendications précédentes, **caractérisé en ce que** chaque dent (39) des roues dentées d'entraînement (36) présente une épaisseur de dent qui correspond à une longueur intérieure du maillon de chaîne (26) respectif en prise avec la dent (39) moins deux fois l'épaisseur d'un maillon de chaîne (25, 26) présente et/ou correspond au pas des maillons de chaîne (25, 26) des chaînes de convoyage (21) moins deux fois l'épaisseur d'un maillon de chaîne (25, 26) respectif.

5. Convoyeur d'oeufs selon l'une quelconque des revendications précédentes, **caractérisé en ce que** l'écartement entre dents voisines (39) des roues dentées d'entraînement (36) est deux fois plus grand que le pas des maillons de chaîne (25, 26) des chaînes de convoyage (21), et/ou **en ce qu'**une dent (39) respective ne vient en prise qu'avec un maillon de chaîne (26) sur deux.

6. Convoyeur d'oeufs selon l'une quelconque des revendications précédentes, **caractérisé en ce que** chaque roue dentée d'entraînement (36) dispose de cinq à neuf dents identiques (39), disposant de préférence de six ou de huit dents (39) identiques.

7. Convoyeur d'oeufs selon l'une quelconque des revendications précédentes, **caractérisé en ce que** les dents (39) des roues dentées d'entraînement (36) présente, en vue latérale, un profil rectangulaire de préférence pour un hauteurs de dent de 0,7 à 0,9 fois l'épaisseur de dent.

8. Convoyeur d'oeufs selon l'une quelconque des revendications précédentes, **caractérisé en ce que** les dents (39) des roues dentées d'entraînement (36) sont arrondies et/ou biseautées aux transitions des flancs de dent ainsi que des pointes de dent et/ou aux transitions des flancs de dent aux pieds de dent, un rayon des arrondis des pieds de dent de chaque dent (39) correspondant de préférence à 0,4 à 0,5 fois la largeur d'un maillon de chaîne (25, 26) respectif des chaînes de convoyage (21).

9. Convoyeur d'oeufs selon l'une quelconque des revendications précédentes, **caractérisé en ce que** les dents (39) des roues dentées d'entraînement (36) présentent une hauteur qui correspond à 0,8 à 1,2 fois la largeur extérieure des maillons de chaîne (25, 26) des chaînes de convoyage (21).

10. Convoyeur d'oeufs selon l'une quelconque des revendications précédentes, **caractérisé en ce que** ledit au moins un entraînement intermédiaire (28) est disposé entre le brin supérieur (23) et le brin inférieur (24) de la voie de convoyage (10), les deux roues dentées d'entraînement (36) s'étendant en parallèle l'une à côté de l'autre avec un écartement étant disposées de préférence sont disposées entre les lignes supérieures du brin supérieur (23) et les lignes inférieures du brin inférieur (24) des chaînes de convoyage (21) circulant en parallèle.

11. Convoyeur d'oeufs selon l'une quelconque des revendications précédentes, **caractérisé en ce que** les dents (39) des roues dentées d'entraînement (36) dudit au moins un entraînement intermédiaire (28) peuvent être mises en prise au choix avec le brin supérieur (23) ou le brin inférieur (24), en particulier avec les lignes supérieures des chaînes de convoyage (21) ou les lignes inférieures des chaînes de convoyage (21).

12. Convoyeur d'oeufs selon l'une quelconque des revendications précédentes, **caractérisé en ce que** le diamètre extérieur des roues dentées d'entraînement (36) réalisées de manière identique correspond à 0,8 à 1,4 fois l'écartement intérieur entre le brin supérieur (23) et le brin inférieur (24) dans la zone de l'entraînement intermédiaire (28) et/ou à l'écartement entre les lignes supérieures et inférieures des chaînes de convoyage (21) à l'extérieur de la zone dudit au moins un entraînement intermédiaire (28).

13. Convoyeur d'oeufs selon l'une quelconque des revendications précédentes, **caractérisé en ce que** le relief (34) en forme de bosse ou d'arc, ou la déviation (35) du brin supérieur (23) et du brin inférieur (24), en particulier des lignes des chaînes de convoyage (21) du brin supérieur (23) ou du brin inférieur (24), est plus ou moins prononcé, présentant en particulier des hauteurs différentes.

14. Convoyeur d'oeufs selon l'une quelconque des revendications précédentes, **caractérisé en ce que** les chaînes de convoyage (21) sont réalisées sous forme de chaînes à maillons ronds ou de chaînes en acier rond avec des maillons de chaîne identiques, enchaînés les uns aux autres, et en alternance redressés (25) et à plat (26), les chaînes à maillons ronds ou les chaînes en acier rond étant en particulier réalisées sous forme de chaînes de convoyage (21) à maillons longs à dimensions exactes, dans lequel les dents (39) des roues dentées d'entraînement (36) viennent de préférence en prise en alternance avec des maillons de chaîne (36) couchés plats successifs.
